# EUROPÄISCHE PATENTANMELDUNG

(11) **EP 1 108 962 A2**
(43) Veröffentlichungstag der Anmeldung: **20.06.2001**
(21) Anmeldenummer: 00123289.1
(22) Anmeldetag: 27.10.2000
(51) Int. Cl.: F24D 19/10

(54) **Heizungsanlage mit Wärmeerzeuger, Wärmetauscher und mehreren thermostatgesteuerten Verbrauchern**

(30) Priorität: 17.12.1999 DE 19960983
(71) Anmelder: ROBERT BOSCH GMBH, 70442 Stuttgart (DE)
(72) Erfinder: Marko, Armin, 70197 Stuttgart (DE)

(57) **Zusammenfassung**

Die Erfindung betrifft eine Heizungsanlage mit einem regelbaren Wärmeerzeuger für einen von einem Wärmetauscher gespeisten Heizkreis mit mehreren, thermostatgesteuerten Verbrauchern, bei der die Verbraucher mit den zugeordneten Thermostaten jeweils in Reihe geschaltet sind und diese Reihenschaltungen am Vorlauf- und Rücklauf des Wärmetauschers parallel geschaltet sind. Der Betriebsablauf der Heizungsanlage lässt sich unter Berücksichtigung des konkret ausgeführten Heizkreises und dessen Heizleistungsanforderungen dadurch optimieren, dass Messeinrichtungen den Differenzdruck zwischen Vorlauf und Rücklauf und die Temperaturen des Vorlaufs und des Rücklaufes messen, dass die Messwerte einem Mikrorechner zuführbar sind und dass der Mikrorechner in Abhängigkeit von der Größe und Änderung dieser Messwerte und unter Berücksichtigung vorgegebener Betriebsabläufe die Regelparameter für den Wärmeerzeuger verändert.

## Beschreibung

### Stand der Technik

Die Erfindung betrifft eine Heizungsanlage mit einem regelbaren Wärmeerzeuger für einen von einem Wärmetauscher gespeisten Heizkreis mit mehreren, thermostatgesteuerten Verbrauchern, bei der die Verbraucher mit den zugeordneten Thermostaten jeweils in Reihe geschaltet sind und diese Reihenschaltungen am Vor- und Rücklauf des Wärmetauschers parallel geschaltet sind.

Bei den bekannten Heizungsanlagen sind die Wärmeerzeuger zentral aufgestellt und müssen die Netzwärme über den Heizkreis entsprechend der aktuellen Heizleistungsanforderungen der Verbraucher zuführen. Dies übernimmt das im Heizkreis fließende Warmwasser. Der Wärmetauscher wird dabei von dem Wärmeerzeuger mit Wärme versorgt, die er an das im Heizkreis fließende Wasser abgibt. Um die Wärme zu verteilen, baut eine Pumpe im Heizkreis einen Druck auf. Der Heizkreis unterscheidet sich jedoch von Einsatzfall zu Einsatzfall des Wärmeerzeugers, da das Leitungsnetz zu den Verbrauchern stets anders ist, auch die Anzahl der Verbraucher variieren kann und die thermische Umgebung für den Wärmeerzeuger und den Heizkreis sich ändern kann.

Es ist Aufgabe der Erfindung, eine Heizungsanlage der eingangs erwähnten Art so zu verbessern, dass der Betriebsablauf unter Berücksichtigung des konkret ausgeführten Heizkreises und der dabei auftretenden Heizleistungsanforderungen angepasst wird.

Diese Aufgabe wird nach der Erfindung dadurch gelöst, dass Messeinrichtungen den Differenzdruck zwischen Vorlauf und Rücklauf und die Temperaturen des Vorlaufs und des Rücklaufes messen, dass die Messwerte einem Mikrorechner zuführbar sind und dass der Mikrorechner in Abhängigkeit von der Größe und Änderung dieser Messwerte und unter Berücksichtigung vorgegebener Betriebsabläufe die Regelparameter für den Wärmeerzeuger verändert.

Mit Hilfe der so gewonnenen Messwerte kann auf die thermisch-hydraulischen Eigenschaften des Heizkreises und den aktuellen Heizleistungsanforderungen rückgeschlossen werden und mit Hilfe der im Mikrorechner einprogrammierten Algorithmen und Gleichungen die Betriebsweise der Heizungsanlage in Bezug auf Wirkungsgrad, Emissionen, Geräuschentwicklung und Heizkomfort optimiert werden.

Für die Einprogrammierung von Algorithmen und Gleichungen sind Identifizierungs-Betriebe vorgesehen, wobei so vorgegangen wird, dass vor der Inbetriebnahme der Heizungsanlage mit Identifizierungs-Betriebsabläufen unterschiedlicher Zustände des Heizkreises und unterschiedlichen Heizleistungsbedarfs in den Mikrorechner daran angepasste Betriebsabläufe einprogrammierbar sind. Die Betriebsabläufe sind dann an die konkrete Ausführung des Heizkreises und die verschiedenen Heizleistungsanforderungen angepasst.

Mit den Regelparametern kann nach einer Ausgestaltung der Modulationsgrad und das Taktverhalten des Wärmeerzeugers verändert werden.

Bei einem Wärmeerzeuger mit einem Gebläse im Brennstoffzuführungskreis kann die Drehzahl des Gebläses verändert werden. Bei einem Heizkreis mit einer Pumpe können die Regelparameter die Betriebsweise der Pumpe - Dauerbetrieb, Impulsbetrieb - verändern.

Sind im Regelkreis oder Heizkreis Blenden und Ventile vorgesehen, dann können die Regelparameter Stellgrößen für diese steuerbaren Einrichtungen enthalten.

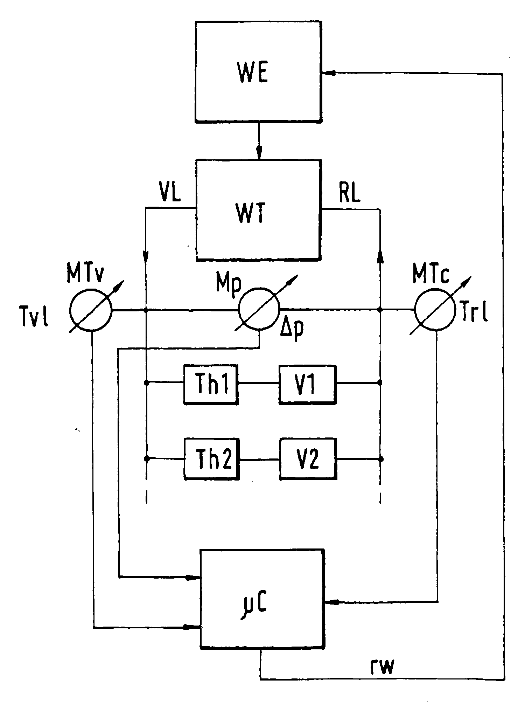

Die Erfindung wird anhand eines in der Zeichnung des Blockschaltbildes dargestellten Ausführungsbeispiels näher erläutert.

Ein Wärmeerzeuger WE, z.B. eine Gastherme mit Brenner, versorgt einen Wärmetauscher WT mit Wärme. Das durch den Wärmetauscher WT fließende Wasser wird dabei erwärmt und über den Heizkreis geleitet. Der Heizkreis kann je nach Ausführung mehrere über Thermostatventile Th1 und Th2 gesteuerte Verbraucher V1 und V2, z.B. Heizkörper, aufweisen. In der Regel sind der Verbraucher V1 bzw. V2 mit den zugeordneten Thermostatventilen Th1 bzw. Th2 in Reihe geschaltet. Diese Reihenschaltungen sind parallel geschaltet mit dem Vorlauf VL und dem Rücklauf RL des Wärmetauschers WT. Dabei sind die Leitungswege zu den Verbrauchern V1 und V2 unterschiedlich lang und können auch auf unterschiedlichen Heizleistungsbedarf abgestimmt sein.

Mit einer Messeinrichtung Mp wird der Druckunterschied Ap zwischen dem Vorlauf VL und dem Rücklauf RL gemessen. Die Messeinrichtungen MTv und MTr messen die Temperaturen Tvl und Trl am Vorlauf VL und am Rücklauf RL, die abhängig sind von dem Zustand des Heizkreises und der Heizleistungsanforderung. Die Messwerte Δp, Tvl und Trl werden einem Mikrorechner µC zugeführt, dem in Identifizierungs-Betrieb mit unterschiedlichen Betriebsbedingungen auf die konkrete Ausführung des Heizkreises und dessen Anforderungen bezogene Algorithmen und Gleichungen für daran angepasste Betriebsabläufe einprogrammiert wurden. Unter Berücksichtigung der Messwerte nach Größe und Änderung kann der Mikrorechner µC Rückschlüsse auf den Zustand des Heizkreises und dessen Anforderungen schließen und unter Rückgriff auf die abgespeicherten Algorithmen und Gleichungen, d.h. Betriebsabläufe, Regelparameter rw zur Regelung des Wärmeerzeugers WE errechnen, die zu einem Betriebsablauf der Heizungsanlage führen, der in Bezug auf Wirkungsgrad, Emissionen, Geräuschentwicklung und Heizkomfort optimiert ist.

Aus der Änderung des Differenzdruckes Δp kann auf die Größe des geschalteten Verbrauchers geschlossen werden. Bei bekanntem Differenzdruck und der Pumpencharakteristik einer Pumpe im Heizkreis kann dessen hydraulischer Gesamtwiderstand und der sich daraus ergebende Gesamtmassenstrom durch den Wärmetauscher ermittelt und bei der Regelung des Wärmeerzeugers WE mit berücksichtigt weden. Aus dem zeitlichen Verlauf des hydraulischen Gesamtwiderstandes und der Temperatur Trl am Rücklauf RL kann der aktuelle Zustand des gekoppelten thermisch-hydraulischen Gesamtsystems identifiziert werden, wobei in jedem Fall die konkrete Ausführung des Heizkreises und dessen Anforderungen und Gegebenheiten mit berücksichtigt sind.

Damit lassen sich folgende Erkenntnisse und Betriebsstrategien ableiten:
a) Bei bekanntem Massestrom und bekannter Temperatur Trl am Rücklauf RL kann die Betriebsweise so optimiert werden, dass keine unnötigen, kurzzeitigen Starts des Wärmeerzeugers mit hohen Emissionen aufgrund von Regelabschaltungen auftreten.
b) Aus der Zeitdifferenz zwischen dem Schließen eines Thermostatventils (Sprung in der Druckdifferenz Ap) und der sich dadurch verändernden Temperatur Trl am Rücklauf RL kann zusammen mit dem Massenstrom die Entfernung und damit der Ort des geschalteten Verbrauchers ermittelt werden. Ein erneuter Start für den Wärmeerzeuger WE kann in Bezug auf optimale Bedürfnisse anderer Verbraucher abgestimmt und beim Wiederanschalten des Verbrauchers gezielt auf diesem Verbraucher abgestimmt werden, insbesondere dann, wenn das Temperatur- und Zeitverhalten des Thermostatventils bekannt ist.
c) Aus der Dämpfung der Temperaturspitzen kann auf die aktuelle Heizlast der einzelnen Verbraucher geschlossen werden.
d) Mit der Kenntnis der hydraulischen Eigenschaften des Heizkreises kann das Betriebsverhalten einer im Heizkreis angeordneten, geregelten Pumpe und damit ihr elektrischer Energiebedarf angepasst werden.

In all diesen Fällen kann eine optimale Anpassung der Betriebsweise unter hoher Energieeffizienz und minimaler Schadstoffemissionen vorgenommen werden.

## Patentansprüche

1. Heizungsanlage mit einem regelbaren Wärmeerzeuger für einen von einem
Wärmetauscher gespeisten Heizkreis mit mehreren, thermostatgesteuerten Verbrauchern, bei der die Verbraucher mit den zugeordneten Thermostaten jeweils in Reihe geschaltet sind und diese Reihenschaltungen am Vorlauf- und Rücklauf des Wärmetauschers parallel geschaltet sind,
dadurch gekennzeichnet,
dass Messeinrichtungen (Mp, MTv, MTr) den Differenzdruck (Ap) zwischen Vorlauf (VL) und Rücklauf (RL) und die Temperaturen (Tvl, Trl) des Vorlaufs und des Rücklaufes messen,
dass die Messwerte (Δp, Tvl, Trl) einem Mikrorechner (µC) zuführbar sind und
dass der Mikrorechner (µC) in Abhängigkeit von der Größe und Änderung dieser Messwerte (Δp, Tvl, Trl) und unter Berücksichtigung vorgegebener Betriebsabläufe die Regelparameter (rw) für den Wärmeerzeuger (WE) verändert.

2. Heizungsanlage nach Anspruch 1,
dadurch gekennzeichnet,
dass vor der Inbetriebnahme der Heizungsanlage mit Identifizierungs-Betriebsabläufen unterschiedlicher Zustände des Heizkreises und unterschiedlichen Heizleistungsbedarfs in den Mikrorechner (µC) daran angepasste Betriebsabläufe einprogrammierbar sind.

3. Heizungsanlage nach Anspruch 1 oder 2,
dadurch gekennzeichnet,
dass mit den Regelparametern (rw) der Modulationsgrad und das Taktverhalten des Wärmeerzeugers (WE) veränderbar ist.

4. Heizungsanlage nach einem der Ansprüche 1 bis 3,
dadurch gekennzeichnet,
dass bei einem Wärmeerzeuger (WE) mit Gebläse im Brennstoff-Zuführungskreis mit den Regelparametern (rw) die Drehzahl des Gebläses veränderbar ist.

5. Heizungsanlage nach einem der Ansprüche 1 bis 4,
dadurch gekennzeichnet,
dass bei einem Heizkreis mit Pumpe mit den Regelparametern (rw) die Betriebsweise der Pumpe veränderbar ist.

6. Heizungsanlage nach einem der Ansprüche 1 bis 5,
dadurch gekennzeichnet,
dass bei Verwendung von Blenden und Ventilen im Regelkreis und im Heizkreis die Regelparameter (rw) als Stellgrößen verwendet sind.
